# EUROPEAN PATENT SPECIFICATION

(11) **EP 0 339 858 B1**
(45) Date of publication and mention of the grant of the patent: **09.11.1994**
(21) Application number: 89303864.6
(22) Date of filing: 19.04.1989
(51) Int. Cl.: G05D 1/06, G05D 1/08

(54) **System including an autopilot, with a simulator, for a fluidborne vehicle**
Autopilotsystem mit einem Simulator für ein sich in Flüssigkeit bewegendes Fahrzeug
Système pourvu d'un pilote automatique avec simulateur pour un véhicule se déplaçant dans un fluide

(30) Priority: 23.04.1988 GB 8809649
(43) Date of publication of application: 02.11.1989
(73) Proprietor: GEC-Marconi Limited, Stanmore Middlesex HA7 4LY (GB)
(72) Inventor: Booth, Thomas Brindley, Hill Head Fareham (GB)
(74) Representative: Hoste, Colin Francis

(56) References cited:
- WO-A-88/09004
- US-A- 4 234 142
- PATENT ABSTRACTS OF JAPAN vol. 10, no. 348 (P-519)(2404) 22 November 1986,& JP-A-61 148513
- PROCEEDINGS OF THE 1987 AMERICAN CONTROL CONFERENCE,vol. 3, 10 June 1987,Minneapolis,US; pages 2109 - 2113; G.N. ROBERTS: "Manoeuvring control of a modern warship"
- PROCEEDINGS OF THE AMERICAN CONTROL CONFERENCE 1986,vol. 2, 19 June 1986,Seattle,US; pages 1313 - 1324; R.J.MARTIN: "Multivariable control of a submersible using the LQG/LTR design methodology"

## Description

THIS INVENTION relates to a system including an autopilot with a simulator for a fluid borne vehicle and, in particular, to such a system including novel means to compute, in real time, and for depth keeping and pitch keeping, purposes, any change of, or 'out-of-trim', heave force, and any change of, or 'out-of-trim', pitching moment, acting on the vehicle.

The term 'out-of-trim' is employed in this specification, and the accompanying claims, to refer to an imbalance of heave force and pitching moment, between external forces and the ballast of the vehicle.

The fluid borne vehicle may comprise a missile, airship, aircraft, or ship. For convenience, hereinafter in this specification reference is made only to such a system for a submarine.

Also for convenience, hereinafter in this specification, and the accompanying claims, reference is made to the instantaneous out-of-trim heave force, and to the instantaneous out-of-trim pitching moment; and to signals instantaneously produced within the system. Such references are employed in the alternative to references indicating that the system operates in real time. Inherently, at least some constituent parts of the system require a finite time to respond to any input thereto.

It is conventional to express the motion of, say, a submarine by equations of state-space form. Thus, the dynamics of the submarine is considered to be concerned with a set of variables, referred to as state variables. Related thereto are other variables, values of at least some of which other variables are capable of being observed, and measured.

Hereinafter in this specification, and the accompanying claims, reference is made only to an ordered state being the ordered depth of the submarine. Further, references to the state variables indicate a set of state variables employed in describing the dynamics of the submarine; and references to the observation variables indicate related variables capable of being observed, and measured; with respect to the obtaining, and/or to the maintenance, of the ordered depth.

The set of state variables are represented by a, so-called, vector of state variables; and the observation variables are represented by a, so-called, vector of state observations. The relationship between the vector of state variables, and the vector of state observations, is such that the state observations vector comprises the state variables vector transformed in accordance with a predetermined measurement matrix. The term vector refers to a column only matrix.

Inherently, the submarine is also subjected to external disturbance forces, affecting the dynamics of the submarine, and represented by a disturbance vector.

It is known for a submarine to include an autopilot, the autopilot to include a controller arranged to receive, possibly inter alia, input signals each representative of any error between the depth and an ordered depth. In response, the controller is arranged to produce a corresponding control signal, this signal determining the desired values of controls, the controls including, for example, hydroplane deflections, or thrusters. Thus, there is caused required, corresponding, changes of the state variables representing the dynamics of the submarine, so that the ordered depth is obtained, and/or is maintained. Each control signal represents a so-called control input vector.

Hence, an autopilot can be considered to be a part of a system arranged to operate automatically upon ordered depth signals, and, in response, the autopilot is to provide desired control signals, whereby there tends to be obtained, and/or there tends to be maintained, the ordered depth of the submarine.

It is known for the autopilot to include a controller arranged to receive input signals each representative of any instantaneous error between the submarine's depth, and an ordered depth; and possibly also input signals each representative of the derivative of the depth error, the change of pitch angle, and the derivative of the change of pitch angle. The controller is referred to as a Proportional Derivative Controller. Such a controller operates satisfactorily only when the disturbance to which the submarine is subjected has a zero mean with respect to time. Such a controller does not cause the submarine to keep depth accurately when the submarine is out-of-trim, there then being a constant, or diverging, offset from the ordered depth.

If the controller also operates upon a term in the integral of depth error, the problem, in relation to depth keeping when the submarine is out-of-trim, is overcome, the offset being removed. The controller is referred to as a Proportional Integral Derivative Controller. With such a controller, however, there are difficulties in relation to depth keeping, and pitch keeping, when the submarine is manoeuvring, for example, when changing depth.

If the motion of the submarine is expressed in the form of state-space equations, the input to the controller referred to in the preceding paragraph can be considered to be representative of the instantaneous values of variables comprising the out-of-trim heave velocity, the out-of-trim pitch velocity, the change of pitch, and the depth error, together considered to be represented by a so-called vector of state error variables. However, the change of heave velocity cannot be measured readily; and the change of pitch velocity requires a rate gyroscope, or other instrument, rendering the system complex and expensive.

Thus, it has been proposed that, advantageously, the autopilot includes a simulator, or state estimator, to calculate, in real time, estimated values of appropriate variables, together considered to be represented by a so-called vector of estimated state variables. Each signal representative of this vector is operated upon, within the autopilot, to provide a corresponding signal representative of a so-called vector of estimated state error variables, and this signal is supplied to the controller, instead of the signal representative of the vector of state error variables, referred to in the preceding paragraph.

In order to overcome the problem, in relation to depth keeping when the submarine is out-of-trim, as referred to above, integration of the depth error, as with the Proportional Integral Derivative Controller, has been proposed for an autopilot including a simulator, or state estimator, see document WO 88 09 004. However, because with a system designed to operate upon the state-space form of equations of submarine motion, the controller output is required to be a linear combination of its inputs, the desired integration cannot be performed by the controller. Instead, it has been proposed that the autopilot is arranged to operate upon an ancillary state error variable, comprising the integral of depth error, the required integration being performed in a part of the autopilot outside the controller. Such an arrangement is equivalent to the integration, performed by the Proportional Integral Derivative Controller, being introduced into the controller of an autopilot including a state estimator. As with the Proportional Integral Derivative Controller, the problem, in relation to depth keeping when the submarine is out-of-trim, is overcome. However, there remain difficulties in relation to depth keeping, and pitch keeping, when the submarine is manoeuvring.

In particular, the proposed arrangement of a system with an autopilot, and having a state estimator, in accordance with the present invention, includes the output of the state estimator being connected to the controller, via a comparator, the comparator being arranged, in addition to receiving each output signal from the state estimator, also to receive a signal representative of, at least a function of, an instantaneously ordered depth for the submarine. In response, the comparator provides to the controller a corresponding signal, representative of the vector of estimated state error variables. This signal is partially representative of any instantaneous error between the estimated, and, in effect, the ordered, values of the submarine's depth, in relation to, at least the function of, the ordered depth. The controller produces, in response, a signal to determine the instantaneously desired values of controls of the submarine, the controls including, for example, hydroplane deflections. This control signal is considered as being supplied to the means considered as representing the dynamics of the vehicle, of a physical part of the system, to cause changes of the state variables in the required manner; and is supplied to the state estimator, to update the estimated state computed by the state estimator.

Further, the arrangement conveniently can be considered as including, in the physical part, measurement means connected to the dynamics means, signals, each representative of the instantaneous, observed values of the observation variables, together considered as the vector of state observations, being considered as being provided by the measurement means. Conveniently, the remainder of the system can be considered also as including measurement means, connected to the output of the state estimator, signals, each representative of the instantaneously estimated values of the corresponding, observation variables, or the vector if estimated state observations, being considered as being provided by this measurement means. Each output signal considered to be from the measurement means of the remainder of the system is compared with the corresponding signal considered to be from the measurement means of the physical part of the system, by a comparator, the output of which comparator is connected to the state estimator. Thus, the estimated state computed by the state estimator also is updated in response to each output signal from the comparator. This comparator output signal is referred to as an observed estimation error signal, representative of the so-called observed estimation error vector, and represents the instantaneous differences between the observed values, and the estimated observed values, of the observation variables.

In accordance with the generality of the problem to all fluid born vehicles it is desirable, and comprises an object of the present invention, to provide for a fluid borne vehicle a system including an autopilot, with a state estimator, which system, in addition to causing the obtaining, and/or the maintaining, of an ordered depth, also has novel means to compute, in real time, any out-of-trim heave force, and any out-of-trim pitching moment, either acting on, or to act on, the vehicle.

According to the present invention a system including an autopilot, with a simulator, for a fluid borne vehicle, the vehicle to be subjected to external disturbance forces affecting the dynamics of the vehicle, which system has a physical part, the dynamics of the physical part is arranged to produce a signal in relation to state variables, the state variables signal representing a so-called vector of instantaneous state variables, with respect to the obtaining, and/or to the maintenance, of an ordered vertical position of the vehicle in relation to a reference position, the state variables signal is to be supplied to first measurement means, the first measurement means is arranged to provide, in response, a signal in relation to observed values of observation variables related to the state variables, this state observations signal representing a so-called vector of instantaneous state observations, the remainder of the system includes the autopilot, in which autopilot there is a controller connected, via a first comparator, to the output of the simulator, the simulator is arranged to compute the estimated state of the vehicle and, in response, to provide a signal representative of the estimated state, the estimated state signal representing a so-called vector of instantaneously estimated state variables, the estimated state signal is to be supplied to the first comparator, in addition the first comparator is to receive, from outside the system, a signal representative of at least a function of any instantaneously ordered vertical position of the vehicle, in response, the first comparator is to provide to the controller a signal both partially representative of any instantaneous error between the estimated, and the ordered, values of the vertical position in relation to at least said funtion of the ordered vertical position, and representing a so-called vector of instantaneously estimated state error variables, in response, the controller is arranged to produce a signal representative of a so-called control input vector, this control signal determining the instantaneously desired values of appropriate controls of the vehicle and both to be supplied to the physical part of the system to cause changes of the state variables in the required manner and is to be supplied to the simulator, the simulator is arranged to compute, in response, an updated estimated state of the vehicle, and also within the remainder of the system, the instantaneous estimated state signal provided by the simulator is supplied to second measurement means, the second measurement means is arranged to provide, in response, an estimated observations signal to represent a so-called vector of instantaneously estimated state observations, the estimated observations signal is supplied to a further comparator, in addition the further comparator receives the instantaneous state observations signal from the first measurement means of the physical part of the system, in response the further comparator provides a signal representative of any instantaneous difference between the observed and the estimated observed values of the observation variables, the observed estimation error signal representing a so-called vector of observed estimation error, this observed estimation error signal is being back to the simulator and the simulator is arranged to compute, in response, an additionally updated estimated state of the vehicle, and the system is characterised in that the remainder of the system also includes computation means, the observed estimation error signal, also is supplied from the further comparator to the computation means, and the computation means is arranged to provide, in response, and individually on separate outputs, a signal representative of the instantaneous out-of-trim heave force, and a signal representative of the instantaneous out-of-trim pitching moment, to act on the vehicle.

Because of the provision of a system in accordance with the present invention, there can be provided, possibly automatically, compensation for any instantaneously computed out-of-trim heave force, and any out-of-trim pitching moment, so that, for example, a submarine, subjected to either a varying, or a constant, disturbance, is brought to, and/or is maintained at, an ordered depth, with the submarine in trim. Having compensated for the out-of-trim heave force, and the out-of-trim pitching moment, the steady state error, associated with the dynamics of the submarine, is eliminated. During any such operation, the pitch angle of the submarine remains constant.

It an be arranged that the stability of the vehicle is not affected. Further, it is not essential that the vehicle is in a steady state, for example, possibly by the vehicle manoeuvring during the compensating action. In addition, the desired manner of operation of the system is unaffected by when, in a manoeuvre, a change of depth is ordered.

Thus, the deficiences of a Proportional Integral Derivative Controller or of a system having an autopilot with a state estimator, and arranged to act in a manner equivalent to a Proportional Integral Derivative Controller, can be overcome.

For a system in accordance with the present invention, there is required to be provided a signal representative of the observed estimation error vector, such as is provided inherently within a system having an autopilot with a state estimator. The observed estimation error vector has, as is required, a steady value; or a mean value, with the value varying slowly compared with the response of the system. Such a slow variation of the vector is caused by a varying, unknown, and non-zero, mean disturbance acting on the vehicle, such as the so-called upward "suction force" on a submarine. If the observed estimation error vector has a steady value, there is a constant disturbance force acting on the vehicle. This vector is provided at the output of the further comparator, comparing the output signals from the two measurement means of the system.

Compensation for any instantaneously computed out-of-trim heave force, and any out-of-trim pitching moment, may be provided by a system in accordance with the present invention, by the system including a so-called Tank Contents Controller, the outputs of the computation means being coupled to the Tank Contents Controller of the remainder of the system, the output of the Tank Contents Controller being connected to the physical part of the system and arranged to control the amount, and the distribution, of the ballast in the vehicle in the appropriate manner, in response to each signal, from the computation means, representative of any instantaneously computed out-of-trim heave force, and any out-of-trim pitching moment, to act on the vehicle. Such a system, in addition to having novel means to compute any out-of-trim heave force, and any out-of-trim pitching moment, also has novel means to control automatically the amount, and distribution, of the ballast in the vehicle, so as to tend to keep the vehicle in trim.

Alternatively, compensation for any out-of-trim heave force, and any out-of-trim pitching moment, can be provided by a system, in accordance with the present invention, including means to display, for an operator, and in response to signals from the computation means, any instantaneously computed out-of-trim heave force, and any out-of-trim pitching moment, to act on the vehicle, the operator to control manually the amount, and the distribution, of the ballast in the vehicle in an appropriate, and possibly conventional, manner.

Said remainder of the system also may include means to correct the ordered vertical position of the vehicle, being both connected to the output of the further comparator, to receive therefrom the instantaneous observed estimation error signal, and being connected to a first constituent part of the computation means, to receive therefrom a signal representative of any instantaneous error between the estimated, and the ordered, values of the vertical position of the vehicle, with the vehicle considered as being in the steady state, the correction means being arranged to produce, in response, a signal representative of any instantaneously estimated error of the ordered vertical position of the vehicle with the vehicle considered as being in the steady state, this signal to be supplied to summing means, arranged also to receive, from outside the system, a signal representative of any instantaneously ordered vertical position of the vehicle, and in response, to produce a signal representative of the ordered vertical position of the vehicle estimated in relation to the instantaneous signal from the correction means, the signal from the summing means being representative of a function of any instantaneously ordered vertical position of the vehicle, to be supplied, together with the instantaneous output estimated state signal from the simulator, to the first comparator.

Conveniently, computations to be performed, by constituent portions of said remainder of the system, are obtained by programming a computer of the system, in the appropriate manner, in accordance with predetermined algorithms.

The present invention will now be described by way of example with reference to the accompanying drawings, in which
Figure 1 is a functional block diagram of a system in accordance with the present invention, for a submarine, the system including an autopilot, with a simulator, or state estimator, together with means to compute, in real time, the out-of-trim heave force, and the out-of-trim pitching moment, acting on, or to act on, the submarine, there also being indicated, in dotted line form, how the output of the computation means, and possibly also an Ordered Depth Corrector, ODC, may be connected within the system, and
Figure 2 is a matrix flow diagram of the system of Figure 1.

The symbols employed in representing submarine dynamics, and relevant in relation to a system in accordance with the present invention, are as follows:
In relation to the mathematical model, for the submarine when in trim:-U Forward velocity.
W Heave velocity.
Q Pitch velocity.
Z Heave force.
M Pitching moment.
H Depth of the centre of gravity below mean surface level.
In relation to disturbed motion of the submarine:-0 Change of pitch.
w Change of, or out-of-trim, heave velocity.
q Change of, or out-of-trim, pitch velocity.
AZ Change of, or out-of-trim, heave force.
AM Change of, or out-of-trim, pitching moment.
h Change of depth from a reference depth, or depth error, = H-Hₒpₒ.
8b, 8s Changes of, respectively, bowplane, and sternplane, deflections.

The dot above a symbol denotes differentiation with respect to time, e.g. H.

The bar above a symbol denotes a value in the steady state, e.g. U.

The circumflex above a symbol denotes an estimated value, or vector, e.g. x.

For what is considered to be a physical part of a system in accordance with the present invention, it is possible to consider there is means representing the dynamics of the submarine, the representation being in relation to a set of state variables, with respect to the obtaining, and/or to the maintenance, of an ordered depth. The state variables are:-
w the change of, or out-of-trim, heave velocity,
q the change of, or out-of-trim, pitch velocity,
0 the change of pitch angle, and
H the depth of the centre of gravity below mean surface level.

Together, these state variables can be considered as being represented by a vector, of state-space form, X, and referred to as the vector of state variables. This vector has elements:- 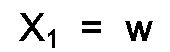 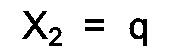 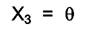 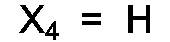 Related to the set of state variables, referred to above, are observation variables, which are capable of being observed, and measured, by what can be considered to be measurement means. Together, these observation variables can be considered as being represented by a vector, of state-space form, Y, referred to as the vector of state observations. This vector has elements:-

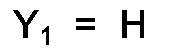

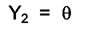

It can be considered that 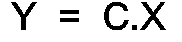 where C is a 2.4 transformation matrix, usually, but not necessarily, with values,

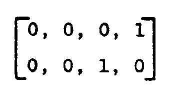

Thus, the relationship between the vector of state variables, and the vector of state observations, is such that the state observations vector comprises the state variables vector transformed in accordance with the predetermined, measurement matrix, C.

The differences between the values of the state variables representing the dynamics of the submarine, and the instantaneously ordered values of the state variables, together can be considered as being represented by a vector x, referred to as the vector of state error variables, 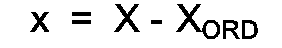 where X_{ORD} is the vector of the ordered values of the state variables.

In the remainder of the system in accordance with the present invention, there is an autopilot with a state estimator. The state estimator, to calculate, in real time, the estimated values of the state variables representing the dynamics of the submarine, has an output which can be considered as being represented by a vector X, the vector of the estimated state variables.

Estimated values of the observation variables, considered as being provided by measurement means associated with the state estimator, can be considered as being represented by a vector Y, the vector of estimated observation variables.

The differences between the estimated values of the state variables, and the corresponding ordered values of the state variables, together can be considered as being represented by a vector x, referred to as the vector of estimated state error variables,

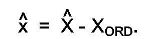

In distinction to the error terms referred to above, the differences between the values of the state variables representing the dynamics of the submarine, and the corresponding output of the state estimator, together are considered as being represented by a vector X_{E}, referred to as the estimation error vector,

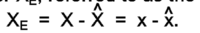

The differences between the observed values of the observation variables of the physical part of the system, and the corresponding estimated values of the observation variables, considered as being provided by measurement means associated with the state estimator, can be considered as being represented by a vector Y_{E}, referred to as the observed estimation error vector,

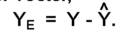

The control values, to cause required, corresponding, changes of the state variables representing the dynamics of the submarine, include, for example, the hydroplane deflection changes. Together, these can be considered to be represented by a control input vector u, including elements _{U1}, representing, for example, bowplane deflection changes 8b, and u₂, representing sternplane deflection changes 8s.

The external disturbance forces, for example, caused by waves, and having an effect on the dynamics of the submarine, together can be considered to be represented by a disturbance vector f, including elements f₁ = ΔZ, and f₂ = AM, respectively, the out-of-trim heave force, and the out-of-trim pitching moment, acting on, or to act on, the submarine.

Using the notation referred to above, the equation of motion of a submarine, and written in continuous state-space form, is, 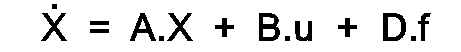 where A, B and D represent matrices of transformations considered as being performed within the system.

Additional matrices referred to below, in relation to the manner of operation of an autopilot of the system, comprise a gain matrix K representing a transformation considered as being performed by a Kalman filter; and a matrix L representing a transformation considered as being performed by the controller of the autopilot. u = L.x.

It is also necessary to consider the derivatives of some of the terms referred to above. The symbols employed to indicate hydrodynamic and hydrostatic derivatives are:-

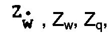

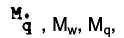

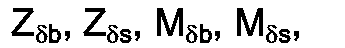

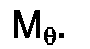

In relation to the mass m of the submarine, when the speed of the submarine changes such that a finite increase in work is required to be done, not only to accelerate the submarine, but also to increase the kinetic energy of the water molecules, there is what can be considered mathematically to be an increase in mass. Similarly, when the submarine is pitching, there is what can be considered mathematically to be an increase in the relevant moment of inertia ly of the submarine. The effective mass of the submarine is,

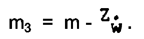

The effective moment of inertia in relation to pitching is,

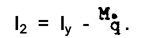

Taking as a reference datum a submarine which is correctly trimmed and neutrally buoyant, with the hydroplanes at the balance angles, such that steady level motion is maintained at zero pitch angle, the equations of disturbed longitudinal motion, including depth keeping and pitch keeping, and in relation to the state, and control, variables, are,

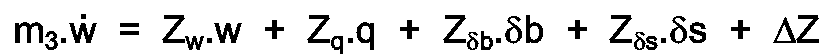

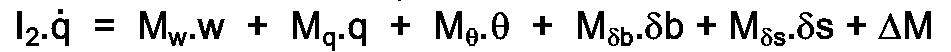

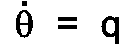

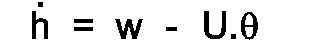

Hence the equation of disturbed longitudinal motion in state-space form is, 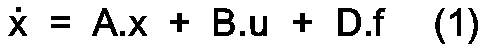 where

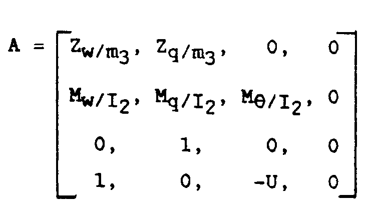

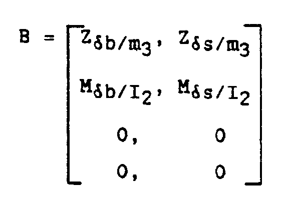

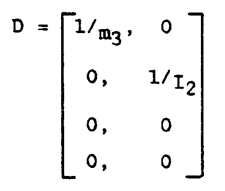

The matrices A and B depend upon the forward speed U of the submarine, or a function thereof, but are otherwise constant. The matrix d is a constant. For a vehicle controlled by thrusters, instead of by hydroplanes, the hydrodynamic derivatives in the B matrix are replaced by the corresponding derivatives for thrusters.

Since the ordered values of the state variables, other than of H, are all zero, and, H=h, and A.X = A.x, the equation in X corresponding to equation (1) is

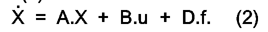

For the state estimator, the corresponding equation to equation (2) is

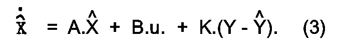

For the controller, the relevant equation is

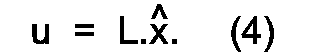

Subtracting equation (3) from equation (2),

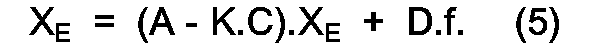

Hence, for a constant speed U, the estimation error vector, X_{E}, depends solely on the external disturbance vector f, irrespective of any manoeuvre of the submarine.

The derivation of equation (5) does not assume the existence of a controller.

However, it is not possible to compute f directly from equation (5), because not all the elements of X_{E} are known. Thus, it is necessary to start from Y_{E}, and employ L, in order to compute f.

Provided the determinant (A-K.C) is not singular, X_{E} will attain a steady state value, (A-K.C)-¹ .D.f.

It follows that the observed estimation error vector, Y_{E}, also achieves a steady state value.

Now, as stated above, u = L.x, from equation (4); 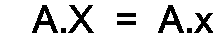 and

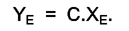

Hence, in the steady state, and from a consideration of equation (3), 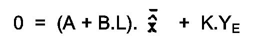 or

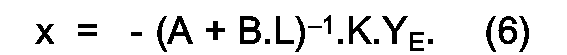

As stated above, a system in accordance with the present invention includes an autopilot, with a state estimator. Various different forms of controller for an autopilot are known. A simple form of controller, referred to as a Proportional Derivative Controller, is arranged to receive input signals each representative of any instantaneous error h, between the submarine's depth H, and an ordered depth H_{ORD}; and possibly also input signals each representative of the derivative of the depth error h, the change of pitch angle 0, and the derivative of the change of pitch angle 8. Such a controller operates satisfactorily only when the disturbance to which the submarine is subjected has a zero mean with respect to time. Such a controller does not cause the submarine to keep depth accurately when the submarine is out-of-trim, there then being a constant, or diverging, offset from the ordered depth.

If the controller also operates upon a term in the integral of the depth error, ∫h.dt, the problem, in relation to depth keeping when the submarine is out-of-trim, is overcome, the offset being removed. The controller is referred to as a Proportional Integral Derivative Controller. With such a controller, however, there are difficulties in relation to depth keeping, and pitch keeping, when the submarine is manoeuvring, for example, when changing depth.

Since, 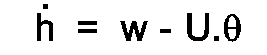 and 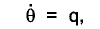 conveniently, the operation of a Proportional Derivative Controller should be capable of being expressed in terms of the state variables, w, q, 0 and h, together considered to be represented by the vector of state error variables, x. Further, a matrix transformation can be employed to represent the operation of the controller, in this specification referred to as a matrix transformation L, and u = L.x. Therefore, the controller should be capable of being embodied within a computer programmed, in the appropriate manner, in accordance with predetermined algorithms.

However, the state variable w, the out-of-trim heave velocity, cannot be measured readily. Further, the measurement of q, the out-of-trim pitch velocity, requires a rate gyroscope, or other instrument, implying that such a system including the autopilot is complex and expensive.

Thus, it has been proposed that, advantageously, the autopilot includes a state estimator, to calculate, in real time, estimated values of appropriate variables, together represented by the vector of estimated state variables, X. Each signal representative of this vector is operated upon, within the autopilot, to provide a corresponding signal representative of the vector of estimated state error variables, x, and this signal is supplied to the controller, instead of the signal representative of the vector of state error variables, x.

In order to overcome the problem, in relation to depth keeping when the submarine is out-of-trim, as referred to above, integration of the depth error fh.dt, as with the Proportional Integral Derivative Controller, has been proposed for an autopilot including a state estimator. However, because with a system designed to operate upon the state-space form of equations of submarine motion, the controller output, u, is required to be a linear combination of its inputs, together comprising the vector of estimated state error variables x, the desired integration cannot be performed by the controller. Instead, it has been proposed that the autopilot is arranged to operate upon an ancillary state error variable, comprising the integral of depth error, x₅ = fh.dt, the required integration being performed in a part of the autopilot outside the controller. Such an arrangement is equivalent to the integration, performed by the Proportional Integral Derivative Controller, being introduced into the controller of an autopilot including a state estimator. As with the Proportional Integral Derivative Controller, the problem, in relation to depth keeping when the submarine is out-of-trim, is overcome. However, there remain difficulties in relation to depth, and pitch, keeping, when the submarine is manoeuvring.

There is now described a system, in accordance with the present invention, including an autopilot, with a state estimator, and in which system are embodied with state-space equations of motion of a submarine, as set out above.

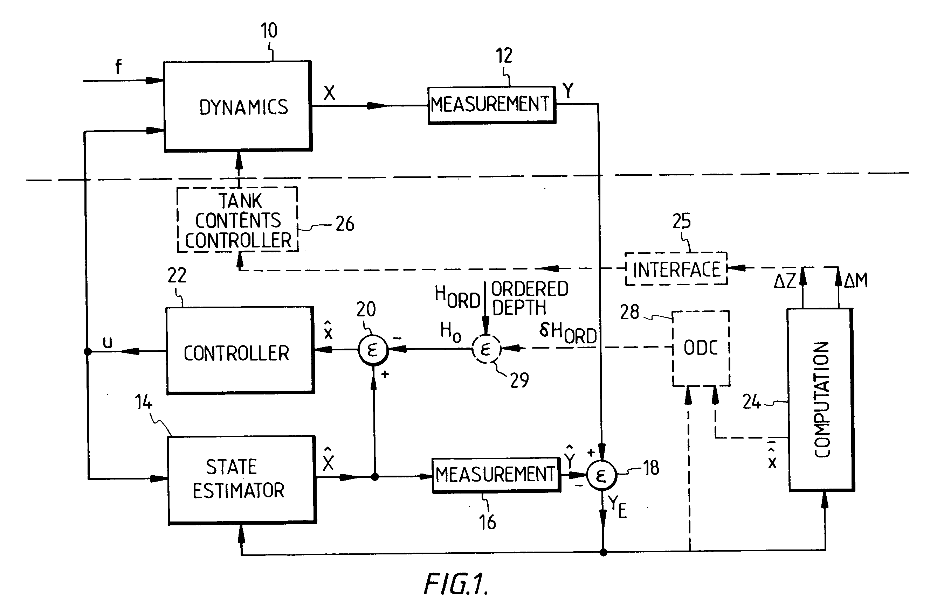

A functional block diagram of the system is shown in Figure 1.

A physical part of the system is considered as having means 10 to represent the dynamics of the submarine, in relation to how the submarine reacts with respect to changes of the variable states, or state variables, of interest for when changes of the depth of the submarine are ordered, and when the submarine is subjected to external disturbances. The dynamics means 10 is considered as receiving input signals, each representative of the vector of external disturbance forces f. The dynamics means is considered as producing signals, each representative of the instantaneous vector of state variables X, and representative of the dynamics of the submarine. This signal is considered as being supplied to measurement means, which, in response, is considered as providing an output signal representative of the instantaneous vector of observation variables Y

The autopilot, included in the remainder of the system, includes a simulator, or state estimator 14, to calculate the estimated values of the state variables, X. The state estimator 14 is included in a loop with what can be considered to be measurement means 16, corresponding to the measurement means 12 of the physical part of the system, and a comparator 18. In operation, the state estimator 14 provides an output signal representative of the vector of instantaneously estimated, state variables X. This signal is considered as being supplied to the associated measurement means 16, which, in response, is considered as producing a corresponding signal representative of the vector of estimated state observations, Y. The comparator 18 is arranged to compare this signal with the instantaneous signal considered to be from the measurement means 12 of the physical part of the system, representative of the vector of state observations, Y, and, in response, provides a signal representative of the observed estimation error vector Yg, or(Y-Y). This signal is fed back, via a Kalman filter, (not separately indicated in Figure 1), to the state estimator 14, to update the estimated state computed by the state estimator. The Kalman filter prevents drift of the output of the autopilot, and smoothes the effect of noise within the system upon the output of the autopilot.

Further, the arrangement of the autopilot, including the state estimator 14, is such that estimated values of the elements of the vector of estimated state variables, w, q, and 8, computed, in real time, by the state estimator 14, are supplied to the controller, instead of the corresponding absolute values, w, q, and 0, from the physical part of the system. In addition, the state estimator computes the estimated depth of the submarine H, comprising the fourth element of the vector of estimated state variables, X. Thus, the vector of estimated state variables, X, supplied by the state estimator, has elements

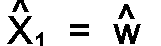

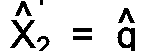

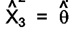

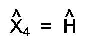

The output of the state estimator 14 is connected, via a second comparator 20, to the input of a controller 22. The second comparator 20, in addition to receiving each output signal X from the state estimator 14, also receives each signal representative of the instantaneously ordered depth, H_{ORD'} of the submarine in relation to the mean surface level; or a corrected value thereof, Hₒ, referred to below. With either arrangement, the corresponding output signal from the second comparator 20 is representative of the instantaneous vector of estimated state error variables x, in relation to the ordered depth H_{ORD'} or in relation to the corrected value thereof Hₒ. The second comparator 20 determines the estimated depth error

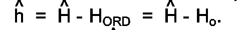

Thus, the vector of estimated state error variables x̂, supplied by the second comparator 20 to the controller 22, has elements

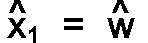

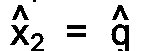

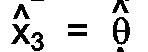

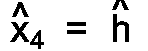

The controller 22, in response to this signal, produces a signal representative of the instantaneously required control values, or control input vector, u. This signal is supplied to the state estimator 14, to cause updating of the estimated state computed by the state estimator; and also is considered as being supplied to the dynamics means 10, of the physical part of the system, to cause changes of the state variables in the required manner.

To complete the system, and in accordance with the present invention, there is provided means 24 to compute, in real time, the out-of-trim heave force ΔZ, and the out-of-trim pitching moment△M, both of either sense, acting on the submarine. Thus, the computation means 24 comprises an out-of-trim estimator.

For convenience, hereinafter in this specification, the out-of-trim heave force △Z is referred to as the heave force; and the out-of-trim pitching moment AM is referred to as the pitching moment.

In relation to the required manner of operation of the computation means 24, and in the steady state:- 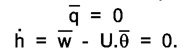 Hence

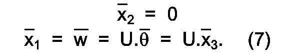

However,

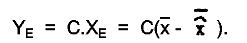

This can be partitioned to give, 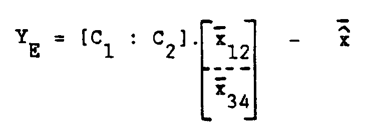 where 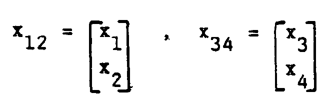 and C₁ and C₂ are the first two and the last two columns of C, respectively. Thus 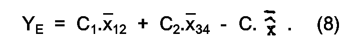 Now 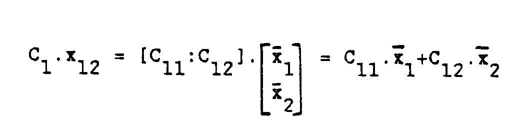 where C₁₁ and C₁₂ are the first and second columns of C, respectively. Using equation (7), and adding a null term, 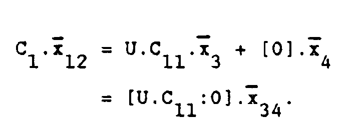 Let 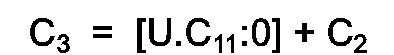 and substituting in (8), 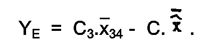 If C₃ is not singular,

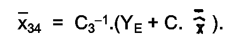

Since X_{E} = x-x and using equation (7),

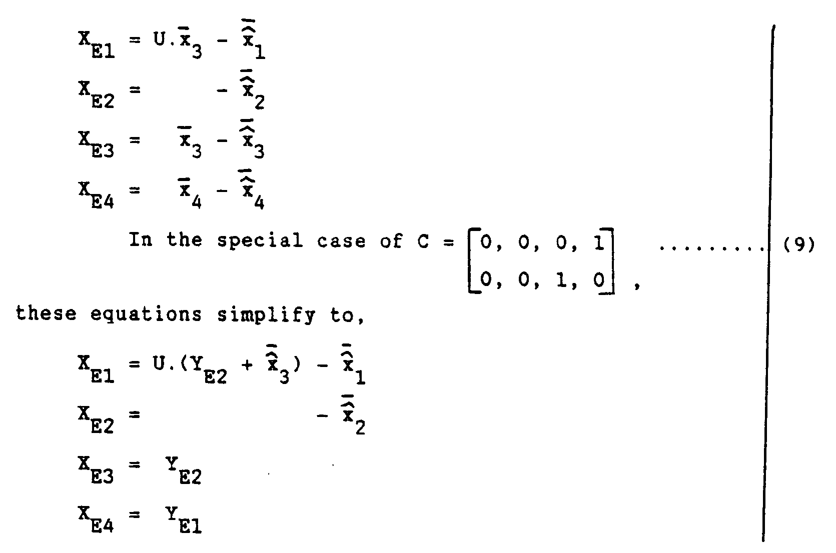

Even when the measurement matrix, C, is not of this form, the measurements usually can be corrected into the form.

Y_{E} is known, and so is x from equation (6). Hence. X_{E} can be determined using equations (9). Further, using equation (5), D.f can be determined.

Let the matrix product D.f be represented by D_{f}.

Since D(1.2) = D(2,1)=0 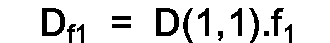 and

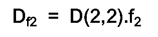

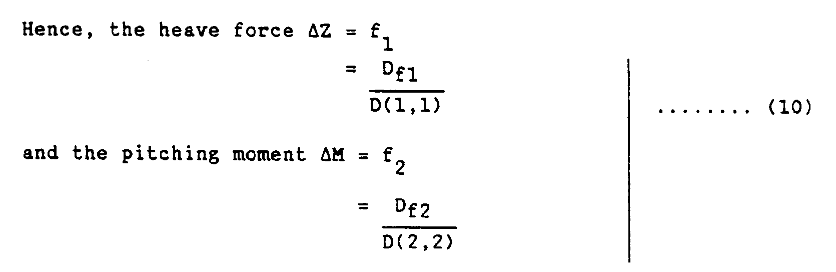

In particular, the computation means 24 is arranged to operate upon each signal from the output of the first comparator 18, and representative of the observed estimation error vector Y_{E}. In response, the computation means 24 is arranged to provide, individually on separate outputs, a signal representative of the instantaneous heave force ΔZ, and the instantaneous pitching moment AM.

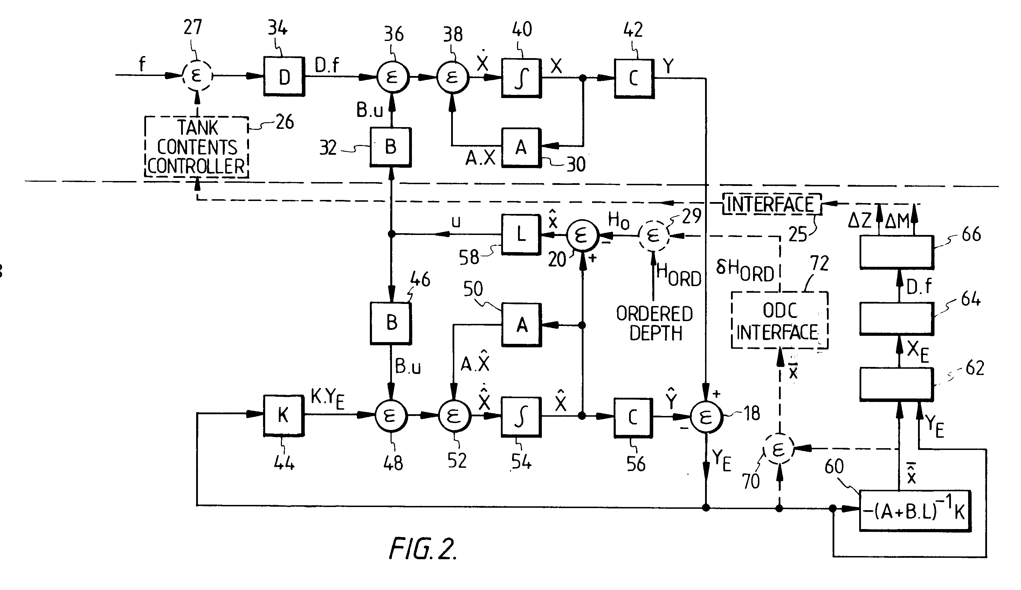

The matrix flow diagram for the system is shown in Figure 2.

By a comparison of Figures 1 and 2, the dynamics means 10 of Figure 1, can be seen from Figure 2, as being considered as including means 30 to perform a transformation in accordance with matrix A, means 32 to perform a transformation in accordance with matrix B, and means 34 to perform a transformation in accordance with matrix D. Each signal representative of an external disturbance vectorf, can be considered as being supplied to the D matrix transformation means 34. Each signal from the controller 22 of the autopilot, and representative of a control input vector, u, can be considered as being supplied to the B matrix transformation means 32. Instantaneous output signals from the two means, 32 and 34, can be considered as being supplied to summing means 36, the corresponding output signal (B.u + D.f), from the summing means, being considered as being supplied to a loop. The loop comprises the matrix transformation means 30, summing means 38, and a combination of integrators 40, with an integrator for each state variable. An output signal from the loop, comprising the corresponding output signal from the integrator combination 40, and representative of the vector of state variables X, is fed back to the A matrix transformation means 30. In response, the means 30 supplies a signal A.X, to the summing means 38, arranged also to receive the instantaneous signal (B.u + D.f), from the summing means 36. The corresponding output signal, X = (A.X + B.u + D.f), from the summing means 38, is supplied to the integrator combination 40. The integrator combination 40 derives an updated value of X from X, X having been derived from a previously updated value of X.

The physical part of the system is considered as being completed by the measurement means 12, of Figure 1, comprising means 42 of Figure 2. The measurement means 12 is considered as performing a transformation in accordance with the predetermined, measurement matrix C, on each output signal X from the integrator combination 40, and, in response, providing a signal representative of the vector of state observations, Y.

For the autopilot, the model embodied in the state estimator 14, of Figure 1, is represented by a portion of the matrix flow diagram, of Figure 2, having a similar form to that considered as representing the dynamics means 10 of the physical part of the system. Thus, each signal from the first comparator 18, to the state estimator 14, and representing the instantaneous observed estimation error vector, Y_{E}, is supplied to a Kalman filter 44, to filter out noise, but considered as comprising means to perform a transformation in accordance with a gain matrix K. Each signal from the controller 22 of the autopilot, and representative of the control input vector, u, is supplied to B matrix transformation means 46 of the state estimator 14. Output signals of the two means, 44 and 46, are supplied to summing means 48, and, in response, a signal (B.u + K.Y_{E}), is supplied to a loop. The loop comprises matrix transformation means 50, summing means 52, and a combination of integrators 54. An output signal from the loop, comprising the corresponding output signal from the integrator combination 54, and representative of the vector of estimated state variables X, is fed back to the A matrix transformation means 50. In response, the means 50 supplies a signal A.X, to the summing means 52, arranged also to receive A the instantaneous signal (B.u + K.Y_{E}), from the summing means 48. The corresponding output signal, X = (AX + B.u + K.Y E), from the summing means 52, is supplied to the integrator combination 54.

The integrator combination 54 derives an updated value of X̂ from 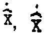 having been derived from a previously updated value of X.

The measurement means 16, of Figure 1, comprises means 56 of Figure 2, considered as performing a transformation in accordance with the predetermined, measurement matrix C, on each output signal X, from the integrator combination 54. In response, the measurement means 12 provides a signal representative of the vector of estimated state observations, Y.

The controller 22, of the autopilot of Figure 1, can be considered as comprising means 58 of Figure 2. The means 58 is considered as performing a transformation in accordance with the matrix L on each input signal thereto, the input signal being representative of the instantaneous vector of the estimated state error variables x̂. The corresponding output signal from the controller 22 represents the control input vector, u.

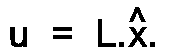

The portion of the matrix flow diagram of Figure 2 relating to the computation means 24, conveniently, can be considered as having four constituent parts.

A first part 60 of the computation means is arranged to multiply each signal representative of the observed estimation error vector, Y_{E}, supplied from the first comparator 18, by a term -(A+B.L)-¹. Thus, in accordance with equation (6), there is provided, in response, a signal representative of the vector of steady state, estimated state error variables, x .

The second part 62 of the computation means is arranged to operate, in accordance with equations (7), (8) and (9), upon the signal representative of the vector 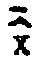 , and upon the signal representative of the vector Y_{E}. In response, the second part is arranged to provide a signal representative of the estimation error vector, X_{E}.

The third part 64 is arranged to operate, in accordance with equation (5), upon the signal representative of the vector X_{E}, and, in response, is to provide a signal representative of the product of matrix D, and the external disturbance vector f.

The fourth part 66 is arranged to operate, in accordance with equation (10), upon the signal representative of D.f. In response, the fourth part 66 is to provide, individually at separate outputs thereof, a signal representative of the instantaneously computed heave force ΔZ, and a signal representative of the instantaneously computed pitching moment AM, acting on the submarine.

Thus, the deficiences of a system having an autopilot with a state estimator, and with the depth error, h, being integrated, to overcome the problem of depth keeping when the submarine is out-of-trim, the deficiences being in relation to depth keeping, and pitch keeping, when the submarine is manoeuvring, can be overcome.

The arrangement may be such that the instantaneously computed values of the heave force ΔZ, and pitching moment AM, provided by the computation means 24, are displayed for an operator, both display and operator being indicated schematically as an interface 25 between part of the system. In response, the operator can control, manually, the amount, and the distribution, of the ballast in the submarine in an appropriate, and possibly conventional, manner, such as by normal manual control inputs or a Tank Contents Controller 26 described hereinafter. Hence, the operator can compensate for the heave force ΔZ, and pitching moment △M, acting on, or to act on, the submarine.

Having corrected for the instantaneously computed heave force ΔZ, and for the instantaneously computed pitching moment △M, the steady state error is also eliminated. Thus, the operator brings, and/or maintains, a submarine, subjected to a varying, or constant, disturbance, to an ordered depth, with the submarine in trim. It can be arranged that the stability of the submarine is not affected. Further, it is not essential that the submarine is in a steady state, for example, possibly the submarine manoeuvring during the compensating action. The desired manner of operation of the system is unaffected by when, in a manoeuvre, a change of depth is ordered. If the autopilot includes means to limit the pitch angle of the submarine during a depth change, the effect on the desired manner of operation of the system is negligible.

In particular, in accordance with the present invention, there is required to be provided within the system a signal representative of the observed estimation error vector, Y_{E}, such as is provided inherently within a system having an autopilot with a state estimator, 14.

The observed estimation error vector, Y_{E}, has, as is required, a steady value. It is unimportant if, in fact, this vector has a mean value, the actual value varying slowly compared with the response of the system. Such a slow variation of the vector is caused by a varying, unknown, and non-zero mean, disturbance acting on the submarine, such as the so-called upward "suction force". If the observed estimation error vector, Y_{E}, has a steady value, there is a constant disturbance force acting on the submarine. This vector, desirably has a continuous form, and is of this form if the state-space equations operated upon within the system are of continuous form.

As stated above, the motion of the submarine is expressed by equations of state-space form, and the equation 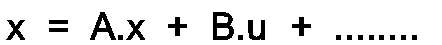 is in continuous form.

The corresponding equation in discrete form can be considered.

If the implementation of the system employs a digital computer, the required computations being performed discretely, at regular intervals, the discrete form of the equation should be considered, 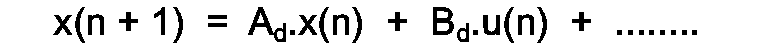 when x(n) is the value of the vector x at the n'th sample, and x(n+1) is the value of the vector at the next sample. The matrices A_{d} and B_{d} are closely related to those, A and B, in the continuous form. For a short update interval 8t, 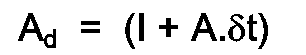 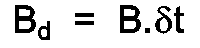 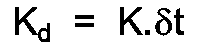 and 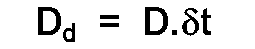 where I is the identity matrix.

In relation to the matrix flow diagram, Figure 2, the means 40 and 54, do not comprise integrators, but, instead comprise a suitable form of updating means.

The manner of operation of the computation means 24 is subject to the time constants, inherently associated with the computation means 24. Because of such time constants, filtering of noisy signals, produced within the system, is obtained. Means to provide smoothing of noisy measurement signals, for example, due to waves, and passed to the computation means 24, may be included in the computation means, especially for when the submarine is at periscope depth under a seaway. Such smoothing is particularly important if the ballast is controlled automatically, in the manner described below.

Advantageously, but not essentially, in a system in accordance with the present invention, and as indicated in Figures 1 and 2, in dotted line form, both instantaneous output signals from the computation means 24, and representative of the heave force ΔZ, and the pitching moment AM, acting on the submarine, are supplied to suitable automatic, that is, non-manual, form of interface means 25, including sign changing means. In response, the interface means 25 produces a signal supplied to the aforementioned Tank Contents Controller 26, arranged to control the amount, and the distribution, of the ballast in the submarine. In response to each signal from the interface means 25, the Tank Contents Controller 26 computes the changes in the tanks' contents which will have a resultant change in the heave force, -AZ, and a resultant change in the pitching moment, -AM. The Tank Contents Controller 26 also is arranged to cause, automatically, the pumping, flooding, and transfer of ballast, to produce the desired changes of the heave force, -AZ, and the pitching moment, -AM.

If the pumping can occur at a high rate, it is required that the Tank Contents Controller 26 includes limiters, or other means, to ensure the stability of the control loop of which it forms a part.

As indicated in Figure 2, it is considered that output signals from the Tank Contents Controller 26 are supplied to summing means 27, of the physical part of the system, the summing means 27 also being considered as receiving each signal representative of the instantaneous external disturbance vector, f. In response, the summing means is considered as supplying a signal representative of the instantaneous value of (f-AZ-AM), to the D matrix transformation means 34 of the dynamics means 10.

The system also may include an Ordered Depth Corrector (ODC), for the submarine, and indicated at 28 in Figure 1, in dotted form.

In relation to the equations (1) to (10), derived above from the equations of motion of a submarine, it is considered that the depth of the submarine below mean surface level, H, is also represented by the element of the vector of the state variables X₄, and by the element of the observed estimation error vector, Y_{E1}. The vector representing the error of the depth of the submarine is,

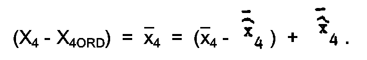

From equation (9) 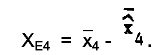 From equation (6) 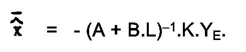 Hence

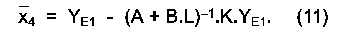

The first term of the right hand side of equation (11) is represented by an element of each output signal Y_{E}, from the first comparator 18. The second term of the right hand side of equation (11) is represented by an element of each output signal, $ , from the first part 60 of the computation means, shown in Figure 2.

Thus, the Ordered Depth Corrector (ODC) 28, has two inputs, one to receive a signal representative of the instantaneous observed estimation error vector, Y_{E}, and supplied by the first comparator 18; and the other to receive the corresponding signal from the first part 60 of the computation means 24, shown in Figure 2, and representative of the instantaneous vector of steady state, estimated state error variables, x . Hence, part of the Ordered Depth Corrector, (ODC) 28, can be considered to be common with the first part 60 of the computation means 24. In response, the Ordered Depth Corrector (ODC) 28, provides a signal representative of the instantaneously estimated, steady state, error of the ordered depth δH_{ORD}.

The output signal from the Ordered Depth Corrector (ODC) 28, is supplied to summing means 29, arranged also to receive the instantaneous signal representative of the ordered depth of the submarine H_{ORD}. In response, the summing means 29 provides a signal representative of the ordered depth estimated in relation to the instantaneous output signal from the Ordered Depth Corrector, Hₒ, and considered to be a function of the ordered depth. This signal is supplied to the second comparator 20, together with the instantaneous signal from the state estimator 14, and representative of the vector of the estimated state variables, X. The corresponding output signal from the second comparator 20 is representative of the instantaneous vector of estimated state error variables, x, partially estimated in relation to the function of the ordered depth, Hₒ, referred to above. The output signal from the second comparator 20 is supplied to the controller 22.

As indicated in the matrix flow diagram of Figure 2, both each signal from the first comparator 18, and representative of the vector Y_{E}, and each signal from the computation means 24, and representative of the vector x are supplied to summing means 70 of the Ordered Depth Corrector (ODC). The signal is supplied from the output of the first part 60 of the computation means 24, considered to be common with the Ordered Depth Corrector (ODC). Each corresponding output signal from the summing means 70 represents the instantaneous vector of state error variables, in relation to the steady state, 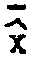 . This signal is supplied to interface means 72, included in the Ordered Depth Corrector, and arranged to operate upon the signal. In response, the interface means 72 produces the required signal representative of the instantaneous estimated error of the ordered depth, OH_{ORD}.

The Ordered Depth Corrector, 28, advantageously, has associated therewith a time constant, such that its output does not fluctuate undesirably when the submarine is at periscope depth under a seaway.

The Ordered Depth Corrector is concerned with only one variable, the depth of the submarine. The Ordered Depth Corrector computes, in real time, the steady state error, or offset, of depth, and applies an opposite, compensating, offset to the ordered value. Thus, for a submarine which is to change, or is changing, depth, the Ordered Depth Corrector operates upon the disturbance vector f, during the depth change. By the time the submarine has arrived at the ordered depth, the compensating offset has already been computed, and operated upon, and the final depth is the ordered depth. Applied limits, for example, to hydroplane deflections, or pitch angle, have only minimal effects on the computation, and these effects disappear as the manoeuvre is completed. The submarine may be subjected to a varying, or constant, disturbance.

However, the Ordered Depth Corrector is not concerned with the out-of-trim parameters associated with the submarine, and cannot quantify the heave force ΔZ, and the pitching moment AM.

The Ordered Depth Corrector computes the relevant steady state error, and as with the computation means, it is not necessary for the submarine to be in a steady state for the Ordered Depth Corrector to operate satisfactorily.

The Ordered Depth Corrector is capable of operating satisfactorily, because a change of the ordered depth caused thereby, does not cause any consequent change of any other state variable of the submarine.

Further, any change of ordered depth caused by the Ordered Depth Corrector does not affect the stability of the submarine. The desired manner of operation of the Ordered Depth Corrector is unaffected by when, in a manoeuvre, a change of depth is commanded.

As for the computation means 24, the Ordered Depth Corrector 28 requires there to be provided within the system a signal representative of the observed estimation error vector, Y_{E}, such as is provided inherently within a system having an autopilot with a state estimator 14.

As indicated above, instead of being connected to the illustrated Tank Contents Controller 26, the two outputs of the computation means 24 may be connected to display means, not shown, to indicate, to an operator, the instantaneously computed heave force ΔZ, and the instantaneously computed pitching moment AM. Conveniently, the arrangement is such that the system has a so-called quick trim mode. An operator, observing the displayed heave force, and pitching moment, values, periodically can initiate this mode. In this mode the system performs, automatically, procedures whereby ballast and trim errors are reduced to nominal zero. Concurrently, equivalent hydroplane angles reduce until they are the same as the so-called set balance angle. The equivalent hydroplane angles maintain the steady state set depth, and are referenced to balance angles, the depth being set by the controller of the autopilot, so as to obtain a desired state variable value.

Changes to the dynamics of a submarine caused by ballast changes, inherently, are slower than changes to the dynamics caused by hydroplane deflection, or thruster, changes. An Ordered Depth Corrector 28 is concerned only with required hydroplane deflection, or thruster, changes; and the computation means 24 is concerned only with required changes of the ballast of the submarine.

Inherently, the output of the Ordered Depth Corrector (ODC) 28, is independently of the output of the computation means 24, and so the optimum arrangement is for the system to include both the computation means 24, and the Ordered Depth Corrector 28, operating simultaneously. Thus, the Ordered Depth Corrector 28, can bring the submarine to an ordered, steady state, depth faster than by an adjustment of ballast caused, or indicated, by the computation means, 24. Subsequently the submarine is brought to be in trim, in accordance with the output of the computation means 24. The Ordered Depth Corrector is arranged to be part of an autopilot of the system. The computation means is connected to a Tank Contents Controller26; or is connected to display means, and the system, desirably, is arranged to have a quick trim mode, as referred to above.

A system in accordance with the present invention may be for a missile, airship, aircraft, or surface ship, instead of for a submarine.

If the system is for a missile, airship, or aircraft, and the ordered state is the height of the vehicle, and if the system includes an Ordered State Corrector, then the Corrector comprises an Ordered Height Corrector, instead of the Ordered Depth Corrector for a submarine.

Conveniently, computations to be performed, by constituent portions of the system, except the physical part of the system, are obtained by programming a computer of the system, in the appropriate manner, in accordance with predetermined algorithms.

## Claims

1. A system including an autopilot, with a simulator (14) for a fluid-borne vehicle, the vehicle to be subjected to external disturbance forces affecting the dynamics of the vehicle, which system has a physical part, the dynamics of which (10) are arranged to produce a signal in relation to state variables, the state variables signal representing a so-called vector of instantaneous state variables, with respect to the obtaining and to the maintenance of an ordered vertical position of the vehicle in relation to a reference position, the state variables signal being supplied to first measurement means (12) arranged to provide, in response, a signal in relation to observed values of observation variables related to the state variables, this state observations signal representing a so-called vector of instantaneous state observations,
the remainder of the system including the autopilot, in which autopilot there is a controller (22) connected via a first comparator (20) to the output of the simulator, the simulator (14) being arranged to compute the estimated state of the vehicle and, in response, to provide a signal representative of the estimated state, the estimated state signal representing a so-called vector of instantaneously estimated state variables, the estimated state signal being supplied to the first comparator (20), which first comparator is also arranged to receive, from outside the system, a signal representative of at least a function of any instantaneously-ordered vertical position of the vehicle, in response, the first comparator providing to the controller a signal representative of any instantaneous error between the estimated and the ordered values of the vertical position in relation to at least said function of the ordered vertical position, and representative of a so-called vector of instantaneously estimated state error variables, in response, the controller is arranged to produce a signal representative of a so-called control input vector, this control signal determining the instantaneously desired values of appropriate controls of the vehicle and to be supplied both to the physical part of the system to cause changes of the state variables in the required manner and to the simulator, the simulator (14) being arranged to compute, in response, an updated estimated state of the vehicle,
and also within the remainder of the system, the instantaneous estimated state signal provided by the simulator is supplied to second measurement means (16), the second measurement means being arranged to provide, in response, an estimated observations signal to represent a so-called vector of instantaneously estimated state observations, the estimated observations signal being supplied to a further comparator (18), in addition the further comparator receives the instantaneous state observations signal from the first measurement means of the physical part of the system, in response to which the further comparator provides a signal representative of any instantaneous difference between the observed and the estimated observed values of the observation variables, this observed estimation error signal representing a so-called vector of observed estimation error, the observed estimation error signal being fed back to the simulator, the simulator being arranged to compute, in response, an additionally updated estimated state of the vehicle, characterised in that
the remainder of the system also including computation means (24), the observed estimation error signal being supplied from the further comparator (18) to the computation means (24), the computation means being arranged to provide in response and individually on separate outputs, a signal representative of the instantaneous out-of-trim heave force and a signal representative of the instantaneous out-of-trim pitching moment to acting on the vehicle.

2. A system as claimed in claim 1 characterised by being adapted for a submarine.

3. A system as claimed in claim 1 or claim 2, characterised in that the outputs of the computation means (24) are coupled to a so-called Tank Contents Controller (26) of said remainder of the system, the output of the Tank Contents Controller being connected to the physical part (10) of the system and arranged to control the amount and the distribution of the ballast in the vehicle in the appropriate manner in response to each signal from the computation means, representative of any instantaneously computed out-of-trim heave force and any out-of-trim pitching moment acting on the vehicle.

4. A system as claimed in claim 1 or claim 2, characterised by including means (25) to display, for an operator and in response to signals from the computation means (24), any instantaneously computed out-of-trim heave force and any out-of-trim pitching moment, acting on the vehicle.

5. A system as claimed in any one of the preceding claims characterised by including, in said remainder of the system, means (28) to correct the ordered vertical position of the vehicle, this correction means being connected both to the output of the further comparator (18), to receive therefrom the instantaneous observed estimation error signal and to a first constituent part (60) of the computation means to receive therefrom a signal representative of any instantaneous error between the estimated and the ordered, values of the vertical position of the vehicle, with the vehicle considered as being in the steady state, the correction means being arranged to produce, in response, a signal representative of any instantaneously estimated error of the ordered vertical position of the vehicle, this signal being supplied to summing means (29), the summing means also being arranged to receive, from outside the system, a signal representative of any instantaneously-ordered vertical position of the vehicle, in response, the summing means produces a signal representative of any instantaneously-ordered vertical position of the vehicle estimated in relation to the instantaneous signal from the correction means, this signal from the summing means representing a function of any instantaneously-ordered vertical position of the vehicle and is supplied, together with the instantaneous estimated state signal from the simulator, to the first comparator (20).

6. A system as claimed in any one of the preceding claims, characterised in that the arrangement is such that computations to be performed by constituent portions of said remainder of the system are to be obtained by programming a computer (24) of the system in the appropriate manner, in accordance with predetermined algorithms.

## Patentansprüche

1. System, das einen Kursgeber enthält, mit einem Simulator (14) für ein in einem Fluid geführtes Fahrzeug, wobei das Fahrzeug externen Störkräften ausgesetzt ist, die die Dynamik des Fahrzeugs beeinträchtigen, wobei das System einen physikalischen Teil hat, dessen Dynamik (10) eingerichtet ist, ein Signal in Relation zu Zustandsvariablen zu erzeugen, wobei das Zustandsvariablensignal einen sogenannten Vektor von augenblicklichen Zustandsvariablen in bezug auf das Erhalten und auf das Beibehalten einer angeordneten vertikalen Position des Fahrzeugs in Relation zu einer Bezugsposition darstellt, wobei das Zustandsvariablensignal zu einer ersten Meßeinrichtung (12) zugeführt wird, die eingerichtet ist, in Antwort darauf ein Signal in Relation zu beobachteten Werten von Beobachtungsvariablen zu erzeugen, die zu den Zustandsvariablen einen Bezug haben, wobei dieses Zustandsbeobachtungssignal einen sogenannten Vektor augenblicklicher Zustandsbeobachtungen darstellt, wobei der Rest des Systems einen Kursgeber enthält, wobei es in dem Kursgeber eine Steuerung (22) gibt, die über einen ersten Komparator (20) mit dem Ausgang des Simulators verbunden ist, wobei der Simulator (14) eingerichtet ist, den geschätzten Zustand des Fahrzeugs zu berechnen und in Antwort darauf ein Signal zu erzeugen, das den geschätzten Zustand darstellt, wobei das geschätzte Zustandssignal einen sogenannten Vektor augenblicklich geschätzter Zustandsvariabler darstellt, wobei das geschätzte Zustandssignal zu dem ersten Komparator (20) zugeführt wird, der auch eingerichtet ist, von außerhalb des Systems ein Signal zu empfangen, das wenigstens eine Funktion irgendeiner augenblicklich angeordneten vertikalen Position des Fahrzeugs darstellt, wobei der erste Komparator in Antwort darauf ein Signal zu der Steuerung liefert, das irgendeinen augenblicklichen Fehler zwischen den geschätzten und den angeordneten Werten der vertikalen Position in Relation zu wenigstens der Funktion der angeordneten vertikalen Position darstellt, und einen sogenannten Vektor von augenblicklich geschätzten Zustandsfehlervariablen darstellt, woraufhin die Steuerung eingerichtet ist, ein Signal zu erzeugen, das einen sogenannten Steuerungs-Eingangsvektor darstellt, wobei dieses Steuerungssignal die augenblicklich gewünschten Werte geeigneter Steuerungen des Fahrzeugs bestimmt und sowohl zu dem physikalischen Teil des Systems zum Veranlassen von Änderungen der Zustandsvariablen in der erforderlichen Weise als auch zu dem Simulator zuzuführen ist, wobei der Simulator (14) eingerichtet ist, in Antwort darauf einen erneuerten geschätzten Zustand des Fahrzeugs zu berechnen,
und wobei auch in dem Rest des Systems das augenblickliche geschätzte Zustandssignal, das durch den Simulator bereitgestellt ist, zu einer zweiten Meßeinrichtung (16) zugeführt wird, wobei die zweite Meßeinrichtung eingerichtet ist, in Antwort darauf ein geschätztes Beobachtungssignal zu erzeugen, um einen sogenannten Vektor augenblicklich geschätzter Zustandsbeobachtungen darzustellen, wobei das geschätzte Beobachtungssignal zu einem weiteren Komparator (18) zugeführt wird, und der weitere Komparator zusätzlich das augenblickliche Zustandsbeobachtungssignal von der ersten Meßeinrichtung des physikalischen Teils des Systems empfängt, und der weitere Komparator in Antwort darauf ein Signal erzeugt, das irgendeine augenblickliche Differenz zwischen den beobachteten und den geschätzten beobachteten Werten der Beobachtungsvariablen darstellt, wobei dieses beobachtete Schätzfehlersignal einen sogenannten Vektor eines beobachteten Schätzfehlers darstellt, wobei das beobachtete Schätzfehlersignal zu dem Simulator zurückgeführt wird, wobei der Simulator eingerichtet ist, um in Antwort darauf einen zusätzlich erneuerten geschätzten Zustand des Fahrzeugs zu berechnen,
dadurch gekennzeichnet, daß
der Rest des Systems auch eine Berechnungseinrichtung (24) enthält, wobei das beobachte Schätzfehlersignal von dem weiteren Komparator (18) zu der Berechnungseinrichtung (24) geführt wird, wobei die Berechnungseinrichtung eingerichtet ist, in Antwort darauf und einzeln an separaten Ausgängen ein Signal bereitzustellen, das die augenblickliche Gierkraft aus dem Trimm darstellt, und ein Signal, das das augenblickliche Nickschwingungsmoment aus dem Trimm darstellt, die auf das Fahrzeug wirken.

2. System nach Anspruch 1, dadurch gekennzeichnet, daß es für ein Unterseeboot geeignet ist.

3. System nach Anspruch 1 oder2, dadurch gekennzeichnet, daß die Ausgänge der Berechnungseinrichtung (24) mit einer sogenannten Tankinhalts-Steuerung (26) des Rests des Systems gekoppelt sind, wobei der Ausgang derTankinhalts-Steuerung mit dem physikalischen Teil (10) des Systems verbunden ist, und eingerichtet ist, den Betrag und die Verteilung des Ballasts in dem Fahrzeug in der geeigneten Weise in Antwort auf jedes Signal von der Berechnungseinrichtung zu steuern, was irgendeine augenblicklich berechnete Gierkraft aus dem Trimm und irgendein Nickschwingungsmoment aus dem Trimm darstellt, die auf das Fahrzeug wirken.

4. System nach Anspruch 1 oder 2, dadurch gekennzeichnet, daß es eine Einrichtung (25) enthält, um irgendeine augenblicklich berechnete Gierkraft aus dem Trimm und irgendein Nickschwingungsmoment aus dem Trimm, die auf das Fahrzeug wirken, für einen Bediener und in Antwort auf Signale von der Berechnungseinrichtung (24) anzuzeigen.

5. System nach einem der vorangehenden Ansprüche, dadurch gekennzeichnet, daß es in dem Rest des Systems eine Einrichtung (28) enthält, um die angeordnete vertikale Position des Fahrzeugs zu korrigieren, wobei diese Korrektureinrichtung sowohl mit dem Ausgang des weiteren Komparators (18) zum Empfangen des augenblicklichen beobachteten Schätzfehlersignals davon als auch mit einem ersten Einzelteil (60) der Berechnungseinrichtung verbunden ist, um davon ein Signal zu empfangen, das irgendeinen augenblicklichen Fehler zwischen den geschätzten und den angeordneten Werten der vertikalen Position des Fahrzeugs darstellt, wobei das Fahrzeug derart anzusehen ist, als ob es in dem stationären Zustand ist, wobei die Korrektureinrichtung eingerichtet ist, um in Antwort darauf ein Signal zu erzeugen, das irgendeinen augenblicklich geschätzten Fehler der angeordneten vertikalen Position des Fahrzeugs darstellt, wobei dieses Signal zu einer Summierungseinrichtung (29) zugeführt wird, wobei die Summierungseinrichtung auch eingerichtet ist, um von außerhalb des Systems ein Signal zu empfangen, das irgendeine augenblicklich angeordnete vertikale Position des Fahrzeugs darstellt, und in Antwort darauf die Summierungseinrichtung ein Signal erzeugt, das irgendeine augenblicklich angeordnete vertikale Position des Fahrzeugs darstellt, die in Relation zu dem augenblicklichen Signal von der Korrektureinrichtung geschätzt ist, wobei dieses Signal von der Summierungseinrichtung eine Funktion irgendeiner augenblicklich angeordneten vertikalen Position des Fahrzeugs darstellt, und zusammen mit dem augenblicklichen geschätzten Zustandssignal von dem Simulator zu dem ersten Komparator (20) zugeführt wird.

6. System nach einem der vorangehenden Ansprüche, dadurch gekennzeichnet, daß die Anordnung derart ist, daß Berechnungen, die durch Einzelteile des Rests des Systems durchzuführen sind, durch Programmieren eines Computers (24) des Systems auf eine geeignete Weise gemäß einem vorbestimmten Algorithmus zu erhalten sind.

## Revendications

1. Système pourvu d'un pilote automatique, avec un simulateur (14), pour un véhicule porté par un fluide, le véhicule étant soumis à des forces perturbatrices extérieures affectant la dynamique du véhicule, ce système ayant un partie physique dont la dynamique (10) est conçue pour produire un signal se rapportant à des variables d'état, le signal de variables d'état représentant ce qu'on appelle un "vecteur" des variables d'état instantanées, en relation avec l'obtention et le maintien d'une position verticale commandée du véhicule, par rapport à une position de référence, le signal de variables d'état étant envoyé à un premier moyen de mesure (12) disposé pour fournir, en réponse, un signal en relation avec les valeurs observées de variables d'observation reliées aux variables d'état, ce signal d'observations d'état représentant ce qu'on appelle un "vecteur" d'observations d'état instantanées,
le reste du système comprenant le pilote automatique, dans lequel se trouve un dispositif de commande (22) connecté via un premier comparateur (20) à la sortie du simulateur, le simulateur (14) étant conçu pour calculer l'état estimé du véhicule, et, en réponse, pour fournir un signal représentatif de l'état estimé, le signal d'état estimé représentant ce qu'on appelle un "vecteur" des variables d'état instantanément estimées, le signal d'état estimé étant envoyé au premier comparateur (20), qui est aussi conçu pour recevoir, de l'extérieur du système, un signal représentatif d'au moins une fonction de toute position verticale instantanément commandée du véhicule, en réponse, le premier comparateur fournissant au dispositif de commande, un signal représentatif de toute erreur instantanée entre les valeurs estimée et commandée de la position verticale en relation avec au moins ladite fonction de la position verticale commandée, et représentatif de ce qu'on appelle un "vecteur" des variables d'erreur d'état instantanément estimées, en réponse, le dispositif de commande est conçu pour produire un signal représentatif de ce qu'on appelle un "vecteur" d'entrée de commande, ce signal de commande déterminant les valeurs instantanément désirées des commandes appropriées du véhicule, qui doivent être envoyées à la fois à la partie physique du système pour provoquer le changement des variables d'état de la façon requise, et au simulateur, le simulateur (14) étant conçu pour calculer, en réponse, un état estimé mis à jour du véhicule,
et aussi dans le reste du système, le signal d'état instantanément estimé fourni par le simulateur est envoyé à un second moyen de mesure (16), le second moyen de mesure étant conçu pour fournir, en réponse, un signal estimé d'observations pour représenter ce qu'on appelle un "vecteur" d'observations d'état instantanément estimées, le signal d'observations estimées étant envoyé à un comparateur additionnel (18), de plus ce comparateur additionnel reçoit le signal d'observations d'état instantané venant du premier moyen de mesure de la partie physique du système, en réponse à quoi le comparateur additionnel produit un signal représentatif de toute différence instantanée entre les valeurs observée et estimée des variables d'observation, ce signal d'erreurs d'estimation observées représentant ce qu'on appelle un "vecteur" d'erreurs d'estimation observées, le signal d'erreurs d'estimation observées étant renvoyé au simulateur, le simulateur étant conçu pour calculer, en réponse, un état estimé additionnel mis à jour du véhicule, caractérisé en ce que
le reste du système comprend aussi des moyens de calcul (24), le signal d'erreurs d'estimation observées étant fourni à partir du comparateur additionnel (18) aux moyens de calcul (24), les moyens de calcul étant conçus pour fournir en réponse, et individuellement sur des sorties séparées, un signal représentatif de la force de portance instantanée hors équilibrage et un signal représentatif du moment de tangage instantané hors équilibrage agissant sur le véhicule.

2. Système tel que revendiqué dans la revendication 1, caractérisé en ce qu'il est adapté à un sous-marin.

3. Système tel que revendiqué dans la revendication 1 ou la revendication 2, caractérisé en ce que les sorties des moyens de calcul (24) sont couplées à ce qu'on appelle un "dispositif de commande (26) des contenus du réservoir" dudit reste du système, la sortie du "dispositif de commande des contenus du réservoir" étant reliée à la partie physique (10) du système et conçue pour commander la quantité et la distribution des ballasts du véhicule de façon appropriée en réponse à chaque signal venant des moyens de calcul, représentatif de toute force de portance instantanément calculée hors équilibrage et de tout moment de tangage hors équilibrage, agissant sur le véhicule.

4. Système tel que revendiqué dans la revendication 1 ou la revendication 2, caractérisé par l'inclusion de moyens (25) pour visualiser, pour un opérateur et en réponse aux signaux venant des moyens de calcul (24), toute force de portance hors équilibrage instantanément calculée et tout moment de tangage hors équilibrage, agissant sur le véhicule.

5. Système tel que revendiqué dans l'une quelconque des revendications précédentes, caractérisé par l'inclusion, dans ledit reste du système, de moyens (28) pour corriger la position verticale commandée du véhicule, ces moyens de correction étant reliés à la fois à la sortie du comparateur additionnel (18), pour en recevoir le signal d'erreur d'estimation instantané observé, et à une première partie intégrante (60) des moyens de calcul pour en recevoir un signal représentatif de toute erreur instantanée entre les valeurs estimée et commandée de la position verticale du véhicule, le véhicule étant considéré comme étant dans l'état permanent, les moyens de correction étant conçus pour produire, en réponse, un signal représentatif de toute erreur instantanément estimée de la position verticale commandée du véhicule, ce signal étant fourni à des moyens de sommation (29), les moyens de sommation étant aussi conçus pour recevoir, de l'extérieur du système, en signal représentatif de toute position verticale instantanément commandée du véhicule, et, en réponse, les moyens de sommation produisent un signal représentatif de toute position verticale instantanément commandée du véhicule, estimée en relation avec le signal instantané venant des moyens de correction, ce signal des moyens de sommation représentant une fonction de toute position verticale instantanément commandée du véhicule et étant fourni, en même temps que le signal d'état instantané estimé venant du simulateur, au premier comparateur (20).

6. Système tel que revendiqué dans l'une quelconque des revendications précédentes, caractérisé en ce que la conception est telle que les calculs à effectuer par les parties intégrantes dudit reste du système sont obtenus en programmant un calculateur (24) du système de façon appropriée, en conformité avec des algorithmes prédéterminés.
